(19) Europäisches Patentamt
European Patent Office
Office européen des brevets

(11) **EP 1 471 741 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(51) Int Cl.:
*H04N 7/01* (2006.01)   *H04N 5/14* (2006.01)
*H04N 5/44* (2006.01)

(21) Anmeldenummer: **04008890.8**

(22) Anmeldetag: **14.04.2004**

(54) **Verfahren und Vorrichtung zur Ermittlung eines Kanten-adaptiven Abstandes zwischen zwei aufeinanderfolgenden Videohalbbildern.**

Method and apparatus for providing an edge adaptive distance measure between two consecutive fields of a video signal

Méthode et appareil pour mesurer de maniére adaptive une distance entre deux images entrelacées

(84) Benannte Vertragsstaaten:
**AT BE BG CH CY CZ DE DK EE ES FI FR GB GR HU IE IT LI LU MC NL PL PT RO SE SI SK TR**

(30) Priorität: **24.04.2003 DE 10318620**

(43) Veröffentlichungstag der Anmeldung:
**27.10.2004 Patentblatt 2004/44**

(73) Patentinhaber: **Micronas GmbH**
**79108 Freiburg i. Br. (DE)**

(72) Erfinder:
• **Hahn, Marko,**
**85579 Neubiberg (DE)**
• **Rieder, Peter, Dr.**
**81737 München (DE)**

(74) Vertreter: **Bickel, Michael**
**Westphal - Mussgnug & Partner**
**Patentanwälte**
**Mozartstrasse 8**
**80336 München (DE)**

(56) Entgegenhaltungen:
**WO-A-00/27109          US-A1- 2003 011 709**
**US-B1- 6 459 455**

• **HAAN DE G ET AL: "DEINTERLACING - AN OVERVIEW" PROCEEDINGS OF THE IEEE, IEEE. NEW YORK, US, Bd. 86, Nr. 9, September 1998 (1998-09), Seiten 1839-1857, XP000850198 ISSN: 0018-9219**

**EP 1 471 741 B1**

**Beschreibung**

Die vorliegende Erfindung betrifft ein Verfahren und eine Vorrichtung zur Ermittlung eines Abstandes zwischen einer ersten Folge von Signalwerten und einer zweiten Folge von Signalwerten, wobei jeweils einem ersten und einem zweiten Signalwert der ersten Folge, die aufeinander folgen, ein zeitlich oder örtlich zwischen dem ersten und zweiten Signalwert liegender dritter Signalwert der zweiten Folge zugeordnet ist.

Derartige erste und zweite Signalfolgen werden beispielsweise in der Bildverarbeitung erhalten, wenn die Bildinformationen zweier zeitlich aufeinander folgender zeilenweise aufgebauter Halbbilder mit versetzten Rasterlagen spaltenweise ausgelesen werden. Derartige Halbbilder sind beispielsweise mit einer Frequenz von 50Hz/60Hz übertragene zeilenverkämmte Fernsehbilder. Die Ermittlung eines Abstandes zwischen zwei auf diese Weise erzeugten Signalen ist beispielsweise erforderlich, um ein Maß dafür zu erhalten, ob und gegebenenfalls wie stark sich zwei aufeinanderfolgende Bilder oder Bildabschnitte einer Bildfolge unterscheiden. Diese Information ist beispielsweise erforderlich, um eine Aussage darüber treffen zu können, ob die Bildfolge ein sogenanntes Standbild oder ob die Bildfolge Bewegungsabläufe zeigt. Abhängig davon können dann beispielsweise geeignete Algorithmen für eine Zwischenbildinterpolation gewählt werden.

Wegen der unterschiedlichen Rasterlagen können die beiden Halbbilder nicht Bildpunkt für Bildpunkt oder die durch spaltenweises Abtasten aus den Halbbildern gewonnenen Signalfolgen nicht Signalwert für Signalwert miteinander verglichen werden. Denn bei zeilenverkämmten Halbbildern, ist den Bildpunktpositionen, denen in dem einen Halbbild ein Bildinformationswert zugeordnet ist, in dem anderen Halbbild gerade kein Bildinformationswert angeordnet. Je zwei aufeinander folgenden Signalwerten einer durch spaltenweises Auslesen eines ersten Halbbildes gewonnenen ersten Signalfolge ist ein Signalwert einer zweiten durch spaltenweises Auslesen eines zweiten Halbbildes gewonnenen zweiten Signalfolge zugeordnet. Der Signalwert der zweiten Folge ist den Signalwerten der ersten Signalfolge örtlich dadurch zugeordnet dass er zu einer Bildpunktposition gehört, die zwischen den Bildpunktpositionen der Signalwerte der ersten Folge liegt.

Für einen Vergleich derartiger Bilder/Bildabschnitte mit unterschiedlicher Rasterlage ist es bekannt, zunächst ein Bildpunktinterpolationsverfahren durchzuführen, um jedem Bildpunkt des Halbbildes mit der einen Rasterlage einen entsprechenden Bildpunkt in dem Halbbild mit der anderen Rasterlage zuordnen zu können, wobei anschließend, wenn jedem Bildpunkt des einen Bildes ein Bildpunkt an der entsprechenden Position in dem anderen Bild zugeordnet ist, ein Vergleichsverfahren durchgeführt werden kann, bei dem die beiden Bilder Bildpunkt für Bildpunkt verglichen werden und die Beträge der Differenzen der den einzelnen Bildpunkten zugeordneten Bildinformationswerte aufaddiert werden.

Die Güte der Abstandsermittlung hängt dabei erheblich von der Güte des Interpolationsverfahrens ab, wobei Interpolationsverfahren die eine zuverlässige Bildpunktinterpolation durchführen, aufwendig zu realisieren sind.

Weitere Signalfolgen, bei denen je zwei Signalwerten einer ersten Signalfolge ein Signalwert der anderen Signalfolge zugeordnet ist, sind beispielsweise Messreihen, die durch regelmäßiges Erfassen einer physikalischen Größe gebildet sind, bei denen aber die Messzeitpunkte der beiden Reihen zeitlich versetzt sind, so dass ein Messwert der einen Reihe stets zeitlich zwischen zwei Messwerten der anderen Reihe aufgenommen wird, und umgekehrt. Auch für derartige Signalfolgen ist es wünschenswert, deren Abstand ermitteln zu können, ohne zuvor mittels eines aufwendigen Interpolationsverfahrens interpolierte Zwischenwerte der beiden Folgen erzeugen zu müssen.

Ziel der vorliegenden Erfindung ist es, ein effektives Verfahren zur Abstandsbestimmung zweier Signale, insbesondere zur Abstandsbestimmung zweier Signale, die Bilder mit unterschiedlichen Rasterlagen definieren, zur Verfügung zu stellen, das kein aufwendiges Interpolationsverfahren erfordert. Ziel der Erfindung ist es weiterhin eine Vorrichtung zur Durchführung eines solchen Verfahrens zur Verfügung zu stellen.

Die WO 00/27109 A beschreibt eine Vorrichtung und ein Verfahren zur Bearbeitung eines einer zeilenverkämmten Halbbildfolge zugeordneten Videosignals. Bei dem bekannten verfahren ist vorgesehen, ein Halbbild in vertikaler Richtung zu interpolieren, um eine Zeile zu erhalten, die in vertikaler Richtung mit Zeilen eines vorausgehenden oder nachfolgenden Halbbilds übereinstimmt. Ein Zeilensignal der interpolierten Zeile wird dann von einem Zeilensignal eines vorausgehenden oder nachfolgenden Halbbildes subtrahiert, um eine Halbbilddifferenz zu erzeugen. Von dieser Halbbilddifferenz kann ein Detailsignal subtrahiert werden, wobei dieses Detailsignal von der Differenz zweier in vertikaler Richtung benachbarter Bildpunkte des nichtinterpolierten Halbbildes abhängig ist. Hierdurch wird ein korrigiertes Halbbilddifferenzsignal erhalten, dessen Signalwerte betragsmäßig begrenzt werden können.

Dieses Ziel wird durch ein Verfahren gemäß der Merkmale der Ansprüche 1 und 2 und durch eine Vorrichtung gemäß der Merkmale der Ansprüche 8 und 9 gelöst. Vorteilhafte Ausgestaltungen der Erfindung sind Gegenstand der Unteransprüche.

Das erfindungsgemäße Verfahren zur Ermittlung eines Abstandes zwischen einer ersten Folge von Signalwerten und einer zweiten Folge von Signalwerten, wobei jeweils einem ersten und einem zweiten Signalwert der ersten Folge, die aufeinander folgen, ein zeitlich oder örtlich zwischen dem ersten und zweiten Signalwert liegender dritter Signalwert der zweiten Folge zugeordnet ist, umfasst die Ermittlung wenigstens eines ersten Abstandswertes anhand folgender Verfahrensschritte:

a) Ermitteln eines Mischwertes aus dem ersten und zweiten Signalwert durch Gewichten dieser Signalwerte,

b) Ermitteln eines mathematischen Abstandes zwischen dem Mischwert und dem dritten Signalwert zur Bereitstellung eines zweiten Abstandswertes,

c) Ermitteln eines Intervallbreitewertes, der von der Intervallbreite eines durch den ersten und zweiten Signalwert definierten Intervalls abhängig ist,

d) Abbilden des zweiten Abstandswertes auf den ersten Abstandswert unter Verwendung des Intervallbreitewertes als Parameter der Abbildung derart, dass eine Abbildungskurve gemäß der der zweite Abstandswert auf den ersten Abstandswert abgebildet wird, wenigstens zwei Abschnitte unterschiedlicher Steigung aufweist, wobei die Steigung der Kurve wenigstens abschnittsweise für zweite Abstandswerte, die kleiner sind als der Intervallbreitwert, kleiner ist als für zweite Abstandswerte, die größer sind als der Intervallbreitwert, und dass für wenigstens einen zweiten Abstandswert der kleiner ist als der Intervallbreitewert, der zugeordnete erste Abstandswert kleiner als dieser zweite Abstandswert ist.

Die erfindungsgemäße Vorrichtung zur Ermittlung eines Abstandes zwischen einer ersten Folge von Signalwerten und einer zweiten Folge von Signalwerten, umfasst folgende Merkmale:

-    eine Mischeinheit zur Erzeugung eines Mischwertes aus einem ersten und zweiten Signalwert, die in der erste Signalfolge aufeinander folgen, durch Gewichten dieser Signalwerte,

-    eine Abstandsermittlungseinheit, der der Mischwert und ein dritter Signalwert der zweiten Folge, der dem ersten und zweiten Signalwert zeitlich oder räumlich zugeordnet ist, zugeführt sind und die einen mathematischen Abstand zwischen dem Mischwert und dem dritten Signalwert ermittelt und daraus einen zweiten Abstandswert bereitstellt,

-    eine Intervallermittlungseinheit, der der erste und zweite Signalwert zugeführt sind und die eine Intervallbreite eines durch den ersten und zweiten Signalwert definierten Intervalls ermittelt und daraus einen Intervallbreitewert bereitstellt,

-    eine Abbildungseinheit, der der zweite Abstandswert und der Abstandswert zugeführt sind und die den ersten Intervallbreitewert bereitstellt, wobei die Abbildungseinheit den zweiten Abstandswert auf den ersten Abstandswert unter Verwendung des Intervallbreitewertes als Parameter derart abbildet, dass eine Abbildungskurve gemäß der der zweite Abstandswert auf den ersten Abstandswert abgebildet wird, wenigstens zwei Abschnitte unterschiedlicher Steigung aufweist, wobei die Steigung der Kurve wenigstens abschnittsweise für zweite Abstandswerte, die kleiner sind als der Intervallbreitwert, kleiner ist als für zweite Abstandswerte, die größer sind als der Intervallbreitwert, und dass für wenigstens einen zweiten Abstandswert der kleiner ist als der Intervallbreitewert, der zugeordnete erste Abstandswert kleiner als dieser zweite Abstandswert ist.

Die Gewichtung des ersten und zweiten Signalwertes bei der Erzeugung des Mischwertes ist vorzugsweise abhängig von der zeitlichen oder örtlichen Lage des dritten Signalwertes bezogen auf den ersten und zweiten Signalwert. Liegt der dritte Signalwert zeitlich oder örtlich in der Mitte zwischen dem ersten und zweiten Signalwert, so wird der Mischwert als Mittelwert des ersten und zweiten Signalwertes gebildet, wobei aus Gründen der Einfachheit auch bei anderen zeitlichen oder örtlichen Positionen des dritten Signalwertes bezogen auf den ersten und zweiten Signalwert der Mittelwert als Mischwert gebildet werden kann. Vorzugsweise wird das Mischungsverhältnis abhängig von der zeitlichen oder örtlichen Lage des dritten Signalwertes zu der Lage des ersten und zweiten Signalwertes bestimmt. Beispielsweise wird der erste Signalwert im Vergleich zu dem zweiten Signalwert stärker gewichtet, wenn der erste Signalwert zeitlich oder räumlich näher zu dem dritten Signalwert liegt als der zweite Signalwert. Entsprechende Mischungsverhältnisse gelten für andere relative Lagen dieser drei Signalwerte zueinander.

Der Intervallbreitewert ist vorzugsweise derart gewählt, dass er der Hälfte der Intervallbreite des durch den ersten und zweiten Signalwert definierten Intervalls entspricht.

Die vorliegende Erfindung wird nachfolgend in Ausführungsbeispielen anhand von Figuren näher erläutert. In den Figuren zeigt

Figur 1    schematisch Bildausschnitte zweier aufeinanderfolgender Halbbilder zur Erläuterung der Erzeugung einer ersten und zweiten Signalfolge mit örtlich zueinander versetzten Signalwerten,

Figur 2    einen detaillierten Ausschnitt aus den Halbbildfolgen gemäß Figur 1 zur Verdeutlichung der gegenseitigen Lagen der Bildpunkte des ersten und zweiten Halbbildes zueinander,

Figur 3      eine graphische Veranschaulichung einzelner Signalwerte der ersten und zweiten Signalfolge,

Figur 4      Signalverläufe unterschiedlicher Funktionen zur Abbildung des zweiten Abstandswertes auf den ersten Abstandswert,

Figur 5      ein erstes Ausführungsbeispiel einer Vorrichtung zur Ermittlung des Abstandes einer ersten und zweiten Signalfolge,

Figur 6      ein zweites Ausführungsbeispiel einer Vorrichtung zur Ermittlung eines Abstandes zwischen einer ersten und zweiten Signalfolge.

In den Figuren bezeichnen, sofern nicht anders angegeben, gleiche Bezugszeichen gleiche Teile mit gleicher Bedeutung.

Das erfindungsgemäße Verfahren zur Ermittlung des Abstandes zweier Signalfolgen wird nachfolgend anhand einer ersten und zweiten Signalfolge erläutert, die durch spaltenweises Erfassen der Bildinformationswerte eines ersten und zweiten Halbbildes, die zeilenverkämmt sind, gebildet sind. Die Erfindung ist jedoch selbstverständlich nicht auf die Ermittlung des Abstandes zweier derartiger Bildsignalfolgen beschränkt sondern ist vielmehr auf beliebige Signale anwendbar, deren Signalwerte zeitlich oder örtlich versetzt zueinander sind.

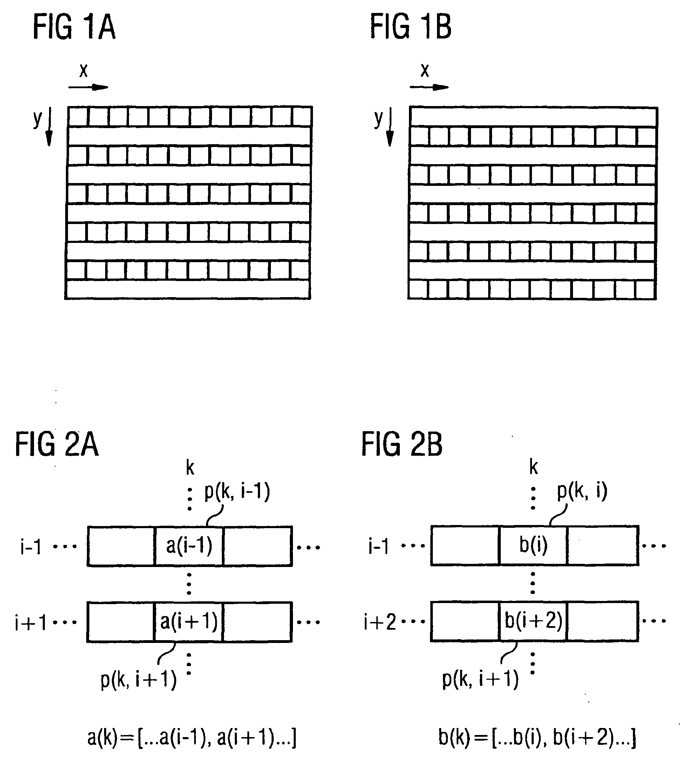

Figur 1 zeigt schematisch Bildausschnitte zweier aufeinanderfolgender zeilenverkämmter Halbbilder A, B, bei denen jeweils nur den Bildpunkten jeder zweiten Zeile Bildinformationswerte zugeordnet sind, wobei diese Zeilen mit Bildinformationswerten in den beiden Halbbildern versetzt zueinander sind, was in Figur 1 dadurch veranschaulicht ist, dass in den Zeilen, deren Bildpunkten Bildinformationswerte zugeordnet sind, die Bildpunkte schematisch als Kästchen dargestellt sind, während die jeweils keine Bildinformationen enthaltenden Zeilen als leere Zeilen dargestellt sind.

Derartige zeilenverkämmte Halbbilder werden beispielsweise bei der Fernsehübertragung mit einer Frequenz von 50 Hz/60Hz übertragen. Um beispielweise bei einer Zwischenbildinterpolation, bei der zu den vorhandenen Bildern Zwischenbilder erzeugt werden, geeignete Interpolationsalgorithmen auswählen zu können, sind Informationen darüber erforderlich, inwiefern durch die vorhandene Halbbildfolge A, B Bewegtbilder oder Standbilder dargestellt sind. Ein unmittelbarer Vergleich der den Bildpunkten des Halbbildes A zugeordneten Bildinformationswerte mit den den Bildpunkten des Halbbildes B zugeordneten Bildinformationswerten scheidet aus, da die zeilenverkämmten Halbbilder komplementär zueinander sind, da den Bildpunkten, denen in dem einen Halbbild Bildinformationen zugewiesen sind, in dem anderen Halbbild also gerade keine Bildinformationen zugewiesen sind.

Liest man die dargestellten Halbbilder A, B jeweils zeilenweise aus, so wird für jede Spalte eine Signalfolge erhalten, wobei jeweils zwei Signalwerten der anhand eines der Halbbilder gewonnenen Signalfolgen ein Signalwert der anderen Signalfolge örtlich dadurch zugeordnet ist, dass der zu dem Signalwert der anderen Signalfolge gehörige Bildpunkt zwischen den Bildpunkten der beiden Signalwerte der einen Signalfolge liegt, wie nachfolgend anhand von Figur 2 veranschaulicht wird.

Figur 2 veranschaulicht einzelne Bildpunkte des Halbbildes A und B in einer beliebig gewählten Spalte k und in Zeilen i-1, i, i+1, i+2. Den in der Spalte k untereinander liegenden Bildpunkten $P(k,i-1)$ und $P(k,i+1)$ des ersten Halbbildes A sind Bildinformationswerte $a(i-1)$ und $a(i+1)$ zugeordnet. Einem zwischen diesen Bildpunkten $P(k,i-1)$ $P(k,i+1)$ liegender Bildpunkt $P(k,i)$ ist in dem Halbbild A kein Bildinformationswert jedoch in dem zweiten Halbbild B ein Bildinformationswert $b(i)$ zugeordnet. Betrachtet man eine Signalfolge $a(k)$, die durch Auslesen einer Spalte des Halbbildes A erzeugt wird und eine Signalfolge $b(k)$, die durch Auslesen einer entsprechenden Spalte des Halbbildes B erzeugt wird, so ist jeweils zwei Signalwerten der Signalfolge $a(k)$, ein Signalwert der Signalfolge $b(k)$ örtlich dadurch zugeordnet, dass der dem Signalwert der Signalfolge $b(k)$ zugehörige Bildpunkt zwischen den Bildpunkten zweier benachbarter Signalwerte der Signalfolge $a(k)$ liegt. Umgekehrt ist entsprechend zwei Signalwerten der Signalfolge $b(k)$ ein Signalwert der Signalfolge $a(k)$ zugeordnet. Bezugnehmend auf Figur 2 ist den Signalwerten $a(i-1)$ und $a(i+1)$ die benachbart in der Signalfolge $a(k)$ angeordnet sind, der Bildinformationswert $b(i)$ der Signalfolge $b(k)$ zugeordnet und den Signalwerten $b(i)$ und $b(i+2)$ der Signalfolge $b(k)$ ist der Signalwert $a(i+1)$ der Signalfolge $a(k)$ zugeordnet. Die Signalwerte sind bei Bildsignalen beispielsweise Luminanzwerte oder Chrominanzwerte.

Bei dem erfindungsgemäßen Verfahren ist vorgesehen, erste Abstandswerte anhand jeweils zweier benachbarter erster und zweiter Signalwerte der einen Signalfolge und des zeitlich oder örtlich zugeordneten dritten Signalwertes der anderen Signalfolge zu ermitteln und diese erhaltenen ersten Abstandswerte zu verknüpfen, insbesondere zu addieren, um ein Maß für den Abstand der beiden Signalfolgen zu erhalten.

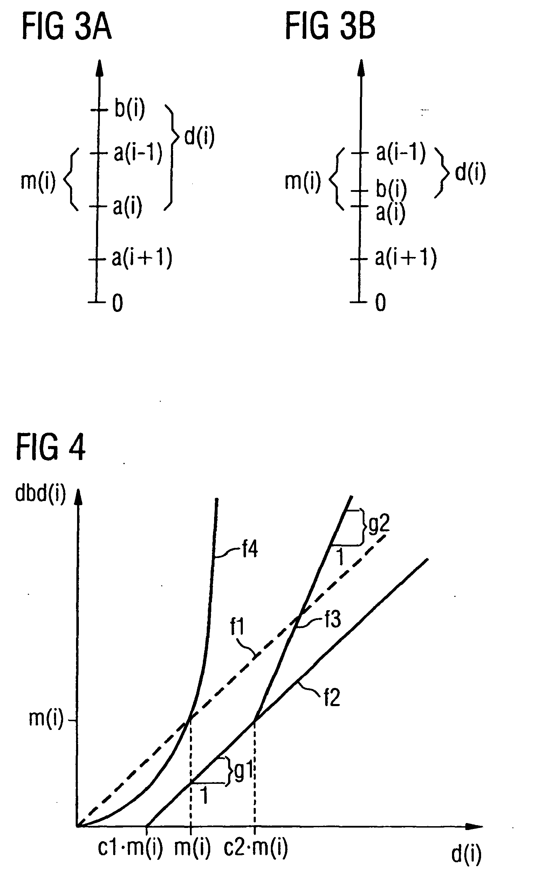

Das Vorgehen bei der Ermittlung eines solchen ersten Abstandswertes wird nachfolgend anhand von Figur 3 erläutert, wobei für die folgende Erläuterung der Signalwert $a(i-1)$ als erster Signalwert und der Signalwert $a(i+1)$ als zweiter Signalwert angenommen wird, und wobei der diesen Signalwerten $a(i-1)$, $a(i+1)$ zugeordnete Signalwert $b(i)$

der zweiten Signalfolge b(k) als dritter Signalwert angenommen wird.

In den Figuren 3A und 3B sind diese Signalwerte, für zwei unterschiedliche Szenarien auf einer Skala nach oben aufgetragen, wobei in einem Fall der dritte Signalwert b(i) innerhalb (Figur 3A) und im anderen Fall außerhalb (Figur 3B) eines durch den ersten und zweiten Signalwert a(i-1), a (i+1) aufgespannten Intervalls liegt.

Zur Ermittlung des ersten Abstandswertes wird zunächst ein Mischwert a(i) aus dem ersten und zweiten Signalwert a(i-1) und a(i+1) erzeugt, der vorzugsweise dem Mittelwert dieser beiden Signalwerte a(i-1), a(i+1) entspricht, für den also gilt:

$$ \texttt{a(i) = 0,5} \cdot \texttt{[a(i-1) + a(i+1)]}. $$

Der erste und zweite Signalwert a(i-1), a(i+1) spannen ein Intervall auf, zu dem ein Intervallbreitewert m(i) ermittelt wird, der vorzugsweise der halben Intervallbreite entspricht, für den also gilt:

$$ \texttt{m(i) = 0,5} \cdot \texttt{|a(i-1) - a(i+1)|}. $$

Außerdem wird ein zweiter Abstandswert d(i) gebildet, indem der Abstand zwischen dem Mischwert a(i) und dem dem ersten und zweiten Signalwert a (i-1), a (i+1) zugeordneten Signalwert b(i) der zweiten Signalfolge b(k) ermittelt wird. Für diesen zweiten Abstandswert d(i) gilt:

$$ \texttt{d(i) = |b(i) - a(i)|}. $$

Der zweite Abstandswert d(i) wird erfindungsgemäß auf den ersten Abstandswert unter Verwendung des Intervallbreitewertes m(i) als Parameter derart abgebildet, dass eine Abbildungskurve, gemäß der der zweite Abstandswert auf den ersten Abstandswert abgebildet wird, wenigstens zwei Abschnitte unterschiedlicher Steigung aufweist, wobei die Steigung der Kurve wenigstens abschnittsweise für zweite Abstandswerte, die kleiner sind als der Intervallbreitewert kleiner ist als für zweite Abstandswerte, die größer sind als der Intervallbreitewert und dass für wenigstens einen zweiten Abstandswert der kleiner ist als der Intervallbreitewert, der zugeordnete erste Abstandswert kleiner als dieser zweite Abstandswert ist.

Figur 4 zeigt beispielhaft die Kurven f2, f3, f4 von drei derartigen Abbildungen, die diesen Anforderungen genügen, wobei zum Vergleich die gestrichelte Kurve f1 eine lineare Abbildung veranschaulicht, durch die der zweite Abstandswert d(i) linear auf den ersten Abstandswert dbd(i) abgebildet wird.

Die durch die Kurve f2 veranschaulichte Abbildung genügt der Beziehung:

$$ \texttt{dbd(i) = 0} \qquad\qquad \texttt{für d(i) < c1} \cdot \texttt{m(i)}, $$

$$ \texttt{dbd(i) = g1} \cdot \texttt{(d(i) - c1} \cdot \texttt{m(i))} \quad \texttt{für d(i)} \geq \texttt{c1} \cdot \texttt{m(i)}, $$

wobei dbd(i) der erste Abstandswert, d(i) der zweite Abstandswert c(i) eine Konstante größer als Null und g1 eine Konstante größer als Null ist, die die Steigung der Kurve bestimmt.

Diese Kurve f2 stellt eine sogenannte Coring-Kennlinie dar, gemäß der zweite Abstandswerte d(i) die kleiner sind als der gewichtete Intervallbreitewert c1·m(i) zu Null gesetzt werden, während für zweite Abstandswerte d(i), die größer sind als dieser gewichtete Intervallbreitewert c1·m(i) der erste Abstandswert dbd(i) dadurch ermittelt wird, dass der Abstand zwischen dem zweiten Abstandswert d(i) und dem gewichteten Intervallbreitewert c1·m(i) mit dem Faktor g1 multipliziert wird. Vorzugsweise ist der Gewichtungsfaktor c1 des Intervallbreitewertes m(i) kleiner als 1.

Gilt c1 kleiner 1 und ist der zweite Abstandswert d(i) kleiner als der gewichtete Intervallbreitewert c1·m(i), so liegt der dritte Signalwert b(i) sicher innerhalb des durch den ersten und zweiten Signalwert a(i-1), a(i+1) aufgespannten Intervalls. Der erste Abstandswert dbd(i) wird dann zu Null gesetzt, weil man davon ausgeht, dass die Abweichung des dritten Signalwertes b(i) von der durch den Mischwert repräsentierten Intervallmitte a(i) aus dem zeitlichen oder örtlichen Versatz des dritten Signalwertes b(i) zu dem ersten und zweiten Signalwert a(i-1) a(i+1) resultiert.

Figur 4 zeigt eine weitere Abbildungskurve f3, die den oben genannten Anforderungen genügt, wobei diese Abbildung folgender Beziehung genügt:

$$dbd(i) = 0 \qquad \text{für } d(i) < c1 \cdot m(i),$$

$$dbd(i) = g1 \cdot (d(i) - c1 \cdot m(i)) \qquad \text{für } c1 \cdot m(i) \leq d(i) \leq c2 \cdot m(i),$$

$$dbd(i) = g2 \cdot (d(i) - c2 \cdot m(i)) + g1 \cdot m(i) \cdot (c2 - c1) \text{ für } c2 \cdot m(i) < d(i),$$

wobei c2>c1 und g2>g1 gilt und wobei c1 vorzugsweise kleiner als 1 ist. g2 ist die Steigung dieser Kurve f3 im oberen Abschnitt.

Diese Gleichungen definieren eine Abbildungskurve mit drei Abschnitten unterschiedlicher Steigung, wobei der zweite Abstandswert d(i) auf einen ersten Abstandswert dbd(i) von Null abgebildet wird, solange der zweite Abstandswert d(i) kleiner als der gewichtete Intervallbreitewert c1·m(i) ist. Für zweite Abstandswerte c(i) größer als dem gewichteten Intervallbreitewert c1·m(i) wird zur Erzeugung des ersten Abstandswertes dbd(i) der Abstand zwischen dem zweiten Abstandswert d(i) und dem gewichteten Intervallbreitewert c1 · m(i) mit einem Gewichtungsfaktor g1 auf den ersten Abstandswert dbd(i) abgebildet. Die Steigung g1 dieses Abschnittes ist geringer als die Steigung g2 eines weiteren Abschnittes, durch den zweite Abstandswerte d(i) die größer sind als ein zweiter gewichteter Intervallbreitewert c2 · m(i) auf den ersten Abstandswert dbd(i) abgebildet werden.

Die Kurve f4 veranschaulicht eine weitere mögliche Abbildungskurve, die folgender Beziehung genügt:

$$dbd(i) = 1/m(i) \cdot c3 \cdot (d(i))^2 \text{ für } m(i) \neq 0,$$

wobei c3 eine Konstante größer als Null ist, die für die Darstellung gemäß Figur 1 gleich 1 ist.

Ist der Intervallbreitewert gleich Null so wird der zweite Abstandswert d(i) beispielsweise gemäß dbd(i) = g3 · d(i) linear auf dem ersten Abstandswert abgebildet.

Allen drei dargestellten Kurven f2, f3, f4, die die Abbildung des zweiten Abstandswertes d(i) auf den ersten Abstandswert dbd(i) beschreiben, ist gemeinsam, dass sie Abschnitte unterschiedlicher Steigung aufweisen, wobei kleine Werte des zweiten Abstandswertes d(i), insbesondere solche zweite Abstandswerte d(i), die kleiner als der Intervallbreitewert m(i) sind, für die Erzeugung des ersten Abstandswertes dbd(i) weniger stark gewichtet werden, als größere zweite Abstandswerte d(i), insbesondere solche zweite Abstandswerte d(i), die größer als der Intervallbreitewert m(i) sind. Außerdem gilt bei allen drei dargestellten Funktionen f2, f3, f4, dass für zweite Abstandswerte d(i), die kleiner sind als der Intervallbreitewert m(i), die zugehörigen ersten Abstandswerte dbd(i) kleiner sind als die zweiten Abstandswerte d(i).

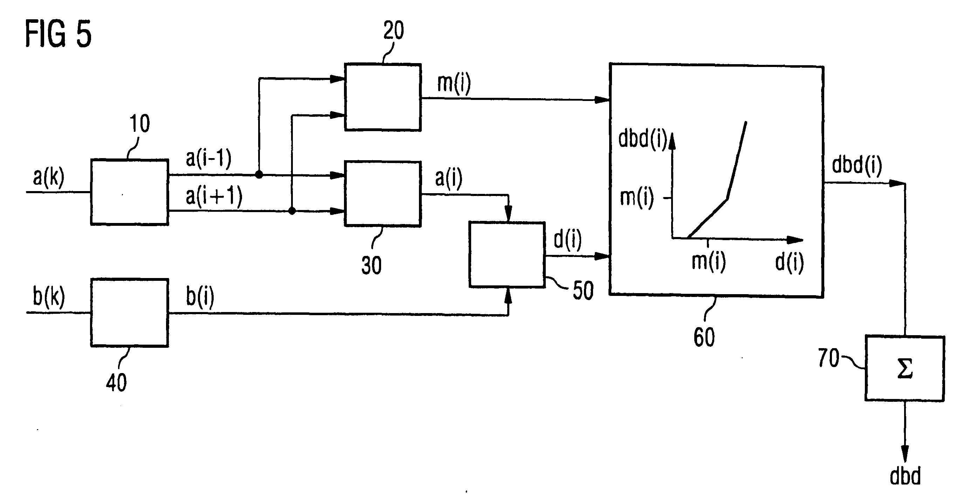

Figur 5 zeigt ein Ausführungsbeispiel einer Vorrichtung zur Ermittlung eines Abstandes zweier Signalfolgen a(k), b(k), die derart gebildet sind, dass jeweils einem ersten und zweiten Signalwert der ersten Folge ein zeitlich oder örtlich zwischen dem ersten und zweiten Signalwert liegender dritter Signalwert der zweiten Folge zugeordnet ist.

Der in Figur 5 dargestellten Vorrichtung sind die erste und zweite Signalfolge a(k), b(k) zugeführt, wobei die Vorrichtung eine Abtasteinrichtung 10 aufweist, die an zwei Ausgängen jeweils zwei aufeinander folgende erste und zweite Signalwerte a(i-1), a(i+1) der Signalfolge a(k) ausgibt. Die zweite Signalfolge b(k) ist einer zweiten Abtasteinrichtung 40 zugeführt, die an ihrem Ausgang jeweils einen Signalwert der zweiten Signalfolge b(k) ausgibt, wobei dieser Signalwert einem dritten Signalwert entspricht, der dem ersten und zweiten Signalwert a(i-1) a(i+1) der ersten Signalfolge a(k) örtlich oder zeitlich zugeordnet ist.

Unter der Annahme, dass die erste und zweite Signalfolge a(k), b(k) getaktete Signale sind, deren Signalwerte im Takt eines ersten Taktsignales vorliegen, weist die erste Abtasteinrichtung 10 geeignete Verzögerungsglieder auf, um die Signale a(i-1) und a(i+1) zeitgleich mit dem Signal b(i) an der zweiten Abtasteinheit 40 zur Verfügung zu stellen.

Die Vorrichtung weist weiterhin eine Abstandsermittlungseinheit 20 auf, der der erste und zweite Signalwert a (i-1), a(i+1) zugeführt sind, und die einen Intervallbreitewert m(i) bereitstellt, der vorzugsweise dem Betrag der halben Intervallbreite des durch den ersten und zweiten Signalwert a(i-1), a(i+1) aufgespannten Intervalls entspricht.

Die Vorrichtung umfasst weiterhin eine Mischeinheit 30 der der erste und zweite Signalwert a(i-1), a (i+1) zugeführt sind und die einen Mischwert a(i) bereitstellt, der vorzugsweise dem Mittelwert des ersten und zweiten Signalwertes a(i-1), a(i+1) entspricht.

Außerdem umfasst die Vorrichtung eine Abstandsermittlungseinheit 50, der der Mischwert a(i) und der dritte Signalwert b(i) zugeführt sind, und die einen zweiten Abstandswert d(i) bereitstellt, der vorzugsweise dem Betrag der Differenz zwischen dem dritten Signalwert b(i) und dem Mischwert a(i) entspricht.

Der Intervallbreitewert m(i) und der zweite Abstandswert d(i) sind einer Abbildungseinheit 60 zugeführt, die den zweiten Abstandswert d(i) unter Verwendung des Intervallbreitewertes m(i) als Parameter in der oben erläuterten Weise auf den ersten Abstandswert dbd(i) abbildet. Diese Abbildungseinheit 60 kann beispielsweise als Nachschlagetabelle realisiert sein, in der entsprechend der anhand von Figur 4 erläuterten Funktionen zu jedem zweiten Abstandswert d(i) unter Berücksichtigung des Parameterwertes m(i) ein zugehöriger erster Abstandswert dbd(i) abgespeichert ist, der am Ausgang ausgegeben werden kann. Der Abbildungseinheit 60 ist eine Summiereinheit nachgeschaltet, die mehrere erste Abstandswerte dbd(i) aufaddiert, um einen Gesamtabstandswert für die Signale a(k), b(k) auszugeben.

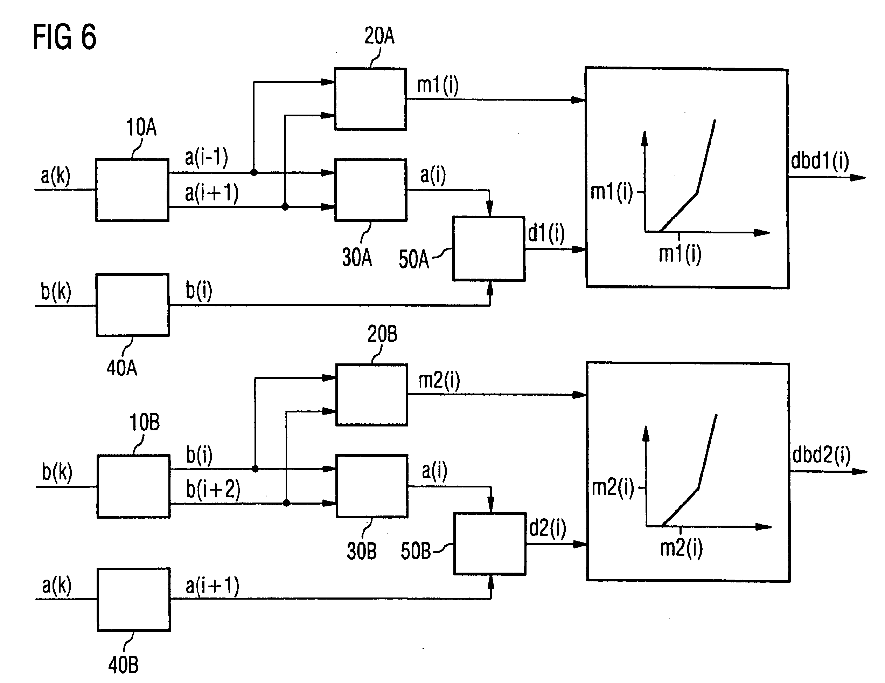

Figur 6 zeigt eine weitere Vorrichtung zur Ermittlung eines ersten Abstandswertes, wobei diese Vorrichtung 2 entsprechend der Vorrichtung gemäß Figur 5 aufgebaute Signalverarbeitungszweige aufweist, deren einzelne Komponenten entsprechend der Schaltungskomponenten in Figur 5 bezeichnet und zur Unterscheidung mit dem Buchstaben A oder B versehen sind. Der erste Signalverarbeitungszweig mit den Abtasteinheiten 10A, 40A, der Intervallermittlungseinheit 20A und der Mischeinheit 30A sowie der Abstandsermittlungseinheit 50A ermittelt jeweils einen ersten Abstandswert dbd1(i) aus benachbarten ersten und zweiten Signalwerten a(i-1), a(i+1) der ersten Signalfolge a(k), wobei m1(i) den zu dem ersten und zweiten Signalwert a(i-1), a(i+1) zugehörigen Intervallbreitewerte bezeichnet. d1(i) in dem oberen Signalverarbeitungszweig bezeichnet die Differenz zwischen dem Mischwert a(i) und dem dritten Signalwert b(i) der Signalfolge b(k).

Der zweite Verarbeitungszweig stellt einen ersten Abstandswert dbd2(i) aus zwei benachbarten ersten und zweiten Signalwerten b(i), b(i+2) der zweiten Signalfolge b(k) und dem diesen Signalwerten b(i), b(i+2) zugeordneten dritten Signalwert a(i+1) der ersten Signalfolge a(k) zur Verfügung. m2(i) am Ausgang der Intervallermittlungseinheit 20B repräsentiert den durch den ersten und zweiten Signalwert b(i), b(i+2) abhängigen Intervallbreitewert. b(i+1) am Ausgang der Mischeinheit 30B repräsentiert einen von dem ersten und zweiten Signalwert b(i), b(i+2) abhängigen Mischwert und d2(i) am Ausgang der Abstandsermittlungseinheit 50B bezeichnet den betragsmäßigen Abstand zwischen dem Mischwert b(i+1) und dem dritten Signalwert a(i+1).

Die Abtasteinheiten 10A, 40A, 10B, 40B der beiden Signalverarbeitungszweige sind so aufeinander abgestimmt, dass sie im Takt eines Taktsignales jeweils zwei aufeinanderfolgende Signalwerte einer der Signalfolgen und die jeweils zugeordneten Signalwerte der anderen Signalfolgen gleichzeitig ausgeben. Die an den Ausgängen der Abbildungseinheiten 60A, 60B zur Verfügung stehenden ersten Abstandswerte dbd1(i), dbd2(i) werden zur Bildung eines ersten Abstandswertes dbd(i) addiert, der von vier Signalwerten, nämlich zwei benachbarten Signalwerten der ersten Signalfolge a(k) und zwei benachbarten Signalwerten der zweiten Signalfolge b(k) abhängig ist, wobei den zwei benachbarten Signalwerten einer der Signalfolgen einer der beiden benachbarten Signalwerte der anderen Signalfolge zeitlich oder örtlich zugeordnet ist.

Bezugszeichenliste

| | |
|---|---|
| 10 | Abtasteinheit |
| 10A, 10B | Abtasteinheit |
| 20 | Intervallermittlungseinheit |
| 20A, 20B | Intervallermittlungseinheit |
| 30 | Mischeinheit |
| 30A, 30B | Mischeinheit |
| 40 | Abtasteinheit |
| 40A, 40B | Abtasteinheit |
| 50 | Abstandsermittlungseinheit |
| 50A, 50B | Anstandsermittlungseinheit |
| 60 | Abbildungseinheit |
| 60A, 60B | Abbildungseinheit |
| 70 | Additionseinheit |

a(k)         erste Signalfolge
b(k)         zweite Signalfolge

**Patentansprüche**

1. Verfahren zur Ermittlung eines Abstandes zwischen einer ersten Folge von Signalwerten a(k) eines Halbbildes und einer zweiten Folge von Signalwerten b(k) eines Halbbildes zur Detektion von Bewegung, wobei jeweils einem ersten und einem zweiten Signalwert (a(i-1), a(i+1)) der ersten Folge, die aufeinander folgen, ein zeitlich oder örtlich zwischen dem ersten und zweiten Signalwert (a(i-1), a(i+1)) liegender dritter Signalwert (b(i)) der zweiten Folge (b(k)) zugeordnet ist, wobei das Verfahren die Ermittlung wenigstens eines ersten Abstandswertes (dbd(i)) anhand folgender Verfahrensschritte umfasst:

   a) Ermitteln eines Mischwertes (a(i)) aus dem ersten und zweiten Signalwert (a(i-1), a(i+1)) durch Gewichten dieser Signalwerte (a(i-1), a(i+1)),
   b) Ermitteln eines mathematischen Abstandes zwischen dem Mischwert (a(i)) und dem dritten Signalwert (b(i)) zur Bereitstellung eines zweiten Abstandswertes (d(i)),
   c) Ermitteln eines Intervallbreitewertes (m(i)), der von der Intervallbreite eines durch den ersten und zweiten Signalwert (a(i-1), a(i+1)) definierten Intervalls abhängig ist,
   d) Abbilden des zweiten Abstandswertes (d(i)) auf den ersten Abstandswert (dbd(i)) unter Verwendung des Intervallbreitewertes (m(i)) als Parameter der Abbildung derart,

   dass eine Abbildungskurve (f2, f3) gemäß der der zweite Abstandswert (d(i)) auf den ersten Abstandswert (dbd(i)) abgebildet wird, wenigstens zwei Abschnitte unterschiedlicher Steigung aufweist, wobei die Steigung der Kurve wenigstens abschnittsweise für zweite Abstandswerte (d(i)), die kleiner sind als der Intervallbreitwert (m(i)), kleiner ist als für zweite Abstandswerte (d(i)), die größer sind als der Intervallbreitwert (m(i)), und
   dass für wenigstens einen zweiten Abstandswert (d(i)) der kleiner ist als der Intervallbreitewert (m(i)), der zugeordnete erste Abstandswert (dbd(i)) kleiner als der zweite Abstandswert (d(i)) ist, und
   dass die Abbildung folgender Beziehung genügt:

$$dbd(i) = 0 \qquad\qquad \text{für } d(i) < c1 \cdot m(i),$$

$$dbd(i) = g1 \cdot (d(i) - c1 \cdot m(i)) \qquad \text{für } c1 \cdot m(i) \leq d(i) \leq c2 \cdot m(i),$$

$$dbd(i) = g2 \cdot (d(i) - c2 \cdot m(i)) + g1 \cdot m(i) \cdot (c2 - c1) \quad \text{für } c2 \cdot m(i) < d(i)$$

   wobei c2>c1 und g2>g1 gilt und

   dbd(i) der erste Abstandswert,
   d(i) der zweite Abstandswertwert,
   m(i) der Intervallbreitewert,
   c1 eine Konstante größer als Null,
   c2 eine Konstante größer als Null,
   g1 eine Konstante größer als Null,
   g2 eine Konstante größer als Null

   ist.

2. Verfahren zur Ermittlung eines Abstandes zwischen einer ersten Folge von Signalwerten a(k) eines Halbbildes und einer zweiten Folge von Signalwerten b(k) eines Halbbildes zur Detektion von Bewegung, wobei jeweils einem ersten und einem zweiten Signalwert (a(i-1), a(i+1)) der ersten Folge, die aufeinander folgen, ein zeitlich oder örtlich zwischen dem ersten und zweiten Signalwert (a(i-1), a(i+1)) liegender dritter Signalwert (b(i)) der zweiten Folge (b(k)) zugeordnet ist, wobei das Verfahren die Ermittlung wenigstens eines ersten Abstandswertes (dbd(i)) anhand folgender Verfahrensschritte umfasst:

a) Ermitteln eines Mischwertes (a(i)) aus dem ersten und zweiten Signalwert (a(i-1), a(i+1)) durch Gewichten dieser Signalwerte (a(i-1), a(i+1)),

b) Ermitteln eines mathematischen Abstandes zwischen dem Mischwert (a(i)) und dem dritten Signalwert (b(i)) zur Bereitstellung eines zweiten Abstandswertes (d(i)),

c) Ermitteln eines Intervallbreitewertes (m(i)), der von der Intervallbreite eines durch den ersten und zweiten Signalwert (a(i-1), a(i+1)) definierten Intervalls abhängig ist,

d) Abbilden des zweiten Abstandswertes (d(i)) auf den ersten Abstandswert (dbd(i)) unter Verwendung des Intervallbreitewertes (m(i)) als Parameter der Abbildung derart,

dass eine Abbildungskurve (f2, f3) gemäß der der zweite Abstandswert (d(i)) auf den ersten Abstandswert (dbd(i)) abgebildet wird, wenigstens zwei Abschnitte unterschiedlicher Steigung aufweist, wobei die Steigung der Kurve wenigstens abschnittsweise für zweite Abstandswerte (d(i)), die kleiner sind als der Intervallbreitwert (m(i)), kleiner ist als für zweite Abstandswerte (d(i)), die größer sind als der Intervallbreitwert (m(i)), und

dass für wenigstens einen zweiten Abstandswert (d(i)) der kleiner ist als der Intervallbreitewert (m(i)), der zugeordnete erste Abstandswert (dbd(i)) kleiner als der zweite Abstandswert (d(i)) ist, und

dass die Abbildung folgender Beziehung genügt:

$$dbd(i) = 1/m(i) \cdot c3 \cdot (d(i))^2 \quad \text{für } m(i) \neq 0$$

wobei

dbd(i) der erste Abstandswert,
d(i) der zweite Abstandswert,
m(i) der Intervallbreitwert,
c3 eine Konstante größer als Null

ist.

3. Verfahren nach Anspruch 2, bei dem die Abbildung für m(i)=0 folgender Beziehung genügt:

$$dbd(i) = g3 \cdot d(i)$$

wobei g3 eine Konstante ist.

4. verfahren nach einem der Ansprüche 1 bis 3, bei dem der Intervallbreitewert (m(i)) der Hälfte der Intervallbreite des durch den ersten und zweiten Signalwert (a(i-1), a(i+1)) definierten Intervalls entspricht.

5. Verfahren nach einem der Ansprüche 1 bis 4, bei dem der Mischwert (a(i)) der Mittelwert des ersten und zweiten Signalwertes (a(i-1), a(i+1)) ist.

6. Verfahren nach einem der vorangehenden Ansprüche, bei dem mehrere erste Abstandswerte (dbd(i);dbd1(i), dbd2(i)) anhand von Signalwerten der ersten und zweiten Signalfolge (a(k), b(k)) gebildet und diese ersten Abstandswerte zur Ermittlung des Abstandes der Signalfolgen miteinander verknüpft werden.

7. Verfahren nach Anspruch 6, bei dem die mehreren ersten Abstandswerte (dbd(i) ; dbd1(i) ; dbd2(i)) addiert werden.

8. Vorrichtung zur Ermittlung eines Abstandes zwischen einer ersten Folge von Signalwerten (a(k)) eines Halbbildes und einer zweiten Folge von Signalwerten (b(k)) eines Halbbildes zur Detektion von Bewegung, die folgende Merkmale aufweist:

- eine Mischeinheit (30; 30A, 30B) zur Erzeugung eines Mischwertes (a(i)) aus einem ersten und zweiten Signalwert (a(i-1), a(i+1)), die in der erste Signalfolge aufeinander folgen, durch Gewichten dieser Signalwerte (a(i-1), a(i+1)),

- eine Abstandsermittlungseinheit (50; 50A, 50B), der der Mischwert (a(i)) und ein dritter Signalwert (b(i)) der zweiten Signalfolge (b(k)), der zeitlich oder örtlich zwischen dem ersten und zweiten Signalwert (a(i-1), a(i+1)) liegt, zugeführt sind und die einen mathematischen Abstand zwischen dem Mischwert (a(i)) und dem dritten Signalwert (b(i)) ermittelt und daraus einen zweiten Abstandswert (d(i)) bereitstellt,

- eine Intervallermittlungseinheit (20; 20A, 20B), der der erste und zweite Signalwert (a(i-1), a(i+1)) zugeführt sind und die eine Intervallbreite eines durch den ersten und zweiten Signalwert (a(i-1), a(i+1)) definierten Intervalls ermittelt und daraus einen Intervallbreitewert (m(i)) bereitstellt,

- eine Abbildungseinheit (60; 60A, 60B), der der zweite Abstandswert (d(i)) und der Intervallbreitewert (m(i)) zugeführt sind und die einen ersten Abstandswert (dbd(i)) bereitstellt, wobei die Abbildungseinheit den zweiten Abstandswert (d(i)) auf den ersten Abstandswert (dbd(i)) unter Verwendung des Intervallbreitewertes (m(i)) als Parameter derart abbildet,

dass eine Abbildungskurve (f2, f3, f4) gemäß der der zweite Abstandswert (d(i) auf den ersten Abstandswert (dbd(i)) abgebildet wird, wenigstens zwei Abschnitte unterschiedlicher Steigung aufweist, wobei die Steigung der Kurve wenigstens abschnittsweise für zweite Abstandswerte (d(i)), die kleiner sind als der Intervallbreitwert (m(i)), kleiner ist als für zweite Abstandswerte (d(i)), die größer sind als der Intervallbreitwert (m(i)), und

dass für wenigstens einen zweiten Abstandswert der kleiner ist als der Intervallbreitewert (m(i)), der zugeordnete erste Abstandswert (dbd(i)) kleiner als der zweite Abstandswert (d(i)) ist, und

dass die durch die Abbildungseinheit durchgeführte Abbildung folgender Beziehung genügt:

$$dbd(i) = 0 \qquad \text{für } d(i) < c1 \cdot m(i),$$

$$dbd(i) = g1 \cdot (d(i) - c1 \cdot m(i)) \qquad \text{für } c1 \cdot m(i) \leq d(i) \leq c2 \cdot m(i),$$

$$dbd(i) = g2 \cdot (d(i) - c2 \cdot m(i)) + g1 \cdot m(i) \cdot (c2 - c1) \quad \text{für } c2 \cdot m(i) < d(i)$$

wobei c2>c1 und g2>g1 gilt und

dbd(i) der erste Abstandswert,
d(i) der zweite Abstandswertwert,
m(i) der Intervallbreitewert
c1 eine Konstante größer als Null,
c2 eine Konstante größer als Null,
g1 eine Konstante größer als Null,
g2 eine Konstante größer als Null

ist.

9. Vorrichtung zur Ermittlung eines Abstandes zwischen einer ersten Folge von Signalwerten (a(k)) eines Halbbildes und einer zweiten Folge von Signalwerten (b(k)) eines Halbbildes zur Detektion von Bewegung, die folgende Merkmale aufweist:

- eine Mischeinheit (30; 30A, 30B) zur Erzeugung eines Mischwertes (a(i)) aus einem ersten und zweiten Signalwert (a(i-1), a(i+1)), die in der erste Signalfolge aufeinander folgen, durch Gewichten dieser Signalwerte (a(i-1), a(i+1)),

- eine Abstandsermittlungseinheit (50; 50A, 50B), der der Mischwert (a(i)) und ein dritter Signalwert (b(i)) der zweiten Signalfolge (b(k)), der zeitlich oder örtlich zwischen dem ersten und zweiten Signalwert (a(i-1), a(i+1)) liegt, zugeführt sind und die einen mathematischen Abstand zwischen dem Mischwert (a(i)) und dem dritten Signalwert (b(i)) ermittelt und daraus einen zweiten Abstandswert (d(i)) bereitstellt,

- eine Intervallermittlungseinheit (20; 20A, 20B), der der erste und zweite Signalwert (a(i-1), a(i+1)) zugeführt sind und die eine Intervallbreite eines durch den ersten und zweiten Signalwert (a(i-1), a(i+1)) definierten Intervalls ermittelt und daraus einen Intervallbreitewert (m(i)) bereitstellt,

- eine Abbildungseinheit (60; 60A, 60B), der der zweite Abstandswert (d(i)) und der Intervallbreitewert (m(i)) zugeführt sind und die einen ersten Abstandswerte (dbd(i)) bereitstellt, wobei die Abbildungseinheit den zweiten Abstandswert (d(i)) auf den ersten Abstandswert (dbd(i)) unter Verwendung des Intervallbreitewertes (m(i)) als Parameter derart abbildet,

dass eine Abbildungskurve (f2, f3, f4) gemäß der der zweite Abstandswert (d(i) auf den ersten Abstandswert (dbd (i)) abgebildet wird, wenigstens zwei Abschnitte unterschiedlicher Steigung aufweist, wobei die Steigung der Kurve wenigstens abschnittsweise für zweite Abstandswerte (d(i)), die kleiner sind als der Intervallbreitwert (m(i)), kleiner ist als für zweite Abstandswerte (d(i)), die größer sind als der Intervallbreitewert (m(i)), und

dass für wenigstens einen zweiten Abstandswert der kleiner ist als der Intervallbreitewert (m(i)), der zugeordnete erste Abstandswert (dbd(i)) kleiner als der zweite Abstandswert (d(i)) ist, und

dass die durch die Abbildungseinheit durchgeführte Abbildung folgender Beziehung genügt:

$$\text{dbd}(i) = 1/m(i) \cdot c3 \cdot (d(i))^2 \quad \text{für } m(i) \neq 0$$

wobei

dbd(i) der erste Abstandswert,
d(i) der zweite Abstandswert,
m(i) der Intervallbreitwert,

ist.

**10.** Vorrichtung nach Anspruch 9, bei dem die Abbildung für m(i)= 0 folgender Beziehung genügt:

$$\text{dbd}(i) = g \cdot d(i)$$

wobei g eine Konstante ist.

**11.** Vorrichtung nach einem der Ansprüche 8 bis 10, bei der der Intervallbreitwert (m(i)) der Hälfte der Intervallbreite des durch den ersten und zweiten Signalwert (a(i-1), a(i+1)) definierten Intervalls entspricht.

**12.** Vorrichtung nach einem der Ansprüche 8 bis 11, bei der der Mischwert (a(i)) der Mittelwert des ersten und zweiten Signalwertes (a(i-1), a(i+1)) ist.

**Claims**

**1.** A method for determining a spacing between a first sequence of signal values a(k) of a field and a second sequence of signal values b(k) of a field for detecting movement, whereby in each case to a first signal value and a second signal value (a(i-1), a(i+1)) of the first sequence, which values are in succession, there is assigned a third signal value (b(i)) of the second sequence (b(k)) lying temporally or spatially between the first and second signal values (a(i-1), a(i+1)), whereby the method includes the determination of at least one first spacing value (dbd(i)) by means of the following steps:

a) determining a mixing value (a(i)) from the first and second signal values (a(i-1), a(i+1) by weighting these signal values (a(i-1), a(i+1),
b) determining a mathematical spacing between the mixing value (a(i)) and the third signal value (b(i)) to provide a second spacing value (d(i)),
c) determining an interval width value (m(i)) dependent on the interval width of an interval defined by the first and second signal values (a(i-1), a(i+1),
d) mapping the second spacing value (d(i)) onto the first spacing value (dbd(i)) using the interval width value (m(i)) as a mapping parameter in such a manner that

a mapping curve (f2, f3) by which the second spacing value (d(i)) is mapped onto the first spacing value (dbd(i))

has at least two segments with different slopes, the slope of the curve, at least in some segments, being less for the second spacing values (d(i)) smaller than the interval width value (m(i)) than for the second spacing values (d(i)) larger than the interval width value (m(i)), and

for at least one second spacing value (d(i)) smaller than the interval width value (m(i)), the associated first spacing value (dbd(i)) is smaller than the second spacing value (d(i)), and

the mapping satisfies the following relationship:

$$\texttt{dbd(i) = 0} \qquad\qquad \texttt{for d(i) < c1·m(1),}$$

$$\texttt{dbd(i) = g1·(d1(i)-c1·m(i))} \qquad \texttt{for c1·m(i)} \leq \texttt{d(i)}$$
$$\leq \texttt{c2·m(i)}$$

$$\texttt{dbd(i) =g2·(d(i)-c2·m(i))+g1·m(1)·(c2-c1)}$$
$$\texttt{for c2·m(ii) < d(i)}$$

wherein c2>c1 and g2>g1 applies, and

    dbd(i) is the first spacing value,
    d(i) is the second spacing value,
    m(i) is the interval width value,
    c1 is a constant greater than zero,
    c2 is a constant greater than zero,
    g1 is a constant greater than zero,
    g2. is a constant greater than zero.

2. A method for determining a spacing between a first sequence of signal values a(k) of a field and a second sequence of signal values b(k) of a field for the detection of movement, whereby in each case to a first and a second signal value (a(i-1), a(i+1)) of the first sequence, which values are in succession, there is associated a third signal value (b(i)) of the second sequence (b(k)) lying temporally or spatially between the first and second signal values (a(i-1), a(i+1), whereby the method includes the determination of at least one first spacing value (dbd(i)) by means of the following steps:

    a) determining a mixing value (a(i)) from the first and second signal values (a(i-1), a(i+1) by weighting these signal values (a(i-1), a(i+1),
    b) determining a mathematical spacing between the mixing value (a(i)) and the third signal value (b(i)) for providing a second spacing value (d(i)),
    c) determining an interval width value (m(i)), which is dependent on the interval width of an interval defined by the first and second signal values (a(i-1), a(i+1),
    d) mapping the second spacing value (d(i)) onto the first spacing value (dbd(i)) using the interval width value (m(i)) as a mapping parameter in such a manner that

a mapping curve (f2, f3) by which the second spacing value (d(i)) is mapped onto the first spacing value (dbd(i)) has at least two segments with different slopes, the slope of the curve, at least in some segments, being less for the second spacing values (d(i)) smaller than the interval width value (m(i)), than for the second spacing values (d(i)) larger than the interval width value (m(i)), and

for at least one second spacing value (d(i)) smaller than the interval width value (m(i)), the associated first spacing value (dbd(i)) is smaller than the second spacing value (d(i)), and

the mapping satisfies the following relationship:

$$dbd(i) = 1/m(i) \cdot c3 \cdot (d(i))2 \text{ for } m(i) \neq 0$$

where

dbd(i) is the first spacing value,
d(i) is the second spacing value,
m(i) is the interval width value,
c3 is a constant greater than zero.

3. A method according to Claim 2,
in which the mapping for m(i)=0 satisfies the following relationship:

$$dbd(i) = g3 \cdot d(i)$$

where g3 is a constant.

4. A method according to one of Claims 1 to 3,
in which the interval width value (m(i)) corresponds to half the interval width of the interval defined by the first and second signal values (a(i-1), a(i+1)).

5. A method according to one of Claims 1 to 4,
in which the mixing value (a(i)) is the mean value of the first and second signal values (a(i-1), a(i+1)).

6. A method according to one of the preceding Claims,
in which a plurality of first spacing values (dbd(i) ; dbd1(i), dbd2(i)) are formed based signal values of the first and second signal sequences (a(k), b(k)) and these first spacing values are linked to determine the spacing between the signal sequences.

7. A method according to Claim 6,
in which the plurality of first spacing values (dbd(i); dbd1(i); dbd2(i)) are added.

8. An apparatus for determining a spacing between a first sequence of signal values (a(k)) of a field and a second sequence of signal values (b(k)) of a field for detecting movement, comprising the following features:

- a mixer (30; 30A, 30B) to generate a mixing value (a(i)) from a first signal value and a second signal value (a(i-1), a(i+1)), which are in succession in the first signal sequence, by weighting these signal values (a(i-1), a(i+1)),
- a spacing determination unit (50; 50A, 50B) to which are supplied the mixing value (a(i)) and a third signal value (b(i)) of the second signal sequence (b(k)), the third value lying temporally or spatially between the first and second signal values (a(i-1), a(i+1), the spacing determination unit determining a mathematical spacing between the mixing value (a(i)) and the third signal value (b(i)), and providing a second spacing value (d(i)) therefrom,
- an interval determination unit (20; 20A, 20B), to which the first and second signal values (a(i-1), a(i+1) are supplied and which determines an interval width of an interval defined by the first and second signal values (a(i-1), a(i+1)) and provides an interval width value (m(i)) therefrom,
- a mapping unit (60; 60A, 60B), to which the second spacing value (d(i)) and the interval width value (m(i)) are supplied and which provides a first spacing value (dbd(i)), the mapping unit mapping the second spacing value (d(i)) onto the first spacing value (dbd(i)) using the interval width value (m(i)) as a parameter in such a manner that

a mapping curve (f2, f3, f4) by which the second spacing value (d(i) is mapped onto the first spacing value (dbd(i)), has at least two segments with different slopes, the slope of the curve, at least in some segments, being less for the second spacing values (d(i)) smaller than the interval width value (m(i)), than for the second spacing values (d(i)) larger than the interval width value (m(i)), and
for at least one second spacing value (d(i)) smaller than the interval width value (m(i)), the associated first spacing value (dbd(i)) is smaller than the second spacing value (d(i)), and
the mapping performed by the mapping unit satisfies the following relationship:

$$\texttt{dbd(i) = 0} \qquad\qquad \texttt{for d(i) < c1} \cdot \texttt{m(i),}$$

$$\texttt{dbd(i) = g1} \cdot \texttt{(d(i)-c1} \cdot \texttt{m(i))} \quad \texttt{for c1} \cdot \texttt{m(i)} \leq \texttt{d(i)}$$
$$\leq \texttt{c2} \cdot \texttt{m(i),}$$

$$\texttt{dbd(i) = g2} \cdot \texttt{(d(i)-c2} \cdot \texttt{m(i))+g1} \cdot \texttt{m(i)} \cdot \texttt{(c2-c1)}$$
$$\texttt{for c2} \cdot \texttt{m(i) < d(i)}$$

where c2>c1 and d2>d1 applies and

dbd(i) is the first spacing value,
d(i) is the second spacing value,
m(i) is the interval width value,
c1 is a constant greater than zero,
c2 is a constant greater than zero,
g1 is a constant greater than zero,
g2 is a constant greater than zero.

9. An apparatus for determining a spacing between a first sequence of signal values (a(k)) of a field and a second sequence of signal values (b(k)) of a field for the detection of movement, comprising the following features:

- a mixer (30; 30A, 30B) to generate a mixing value (a(i)) from a first signal value and a second signal value (a(i-1), a(i+1)), which follow in succession in the first signal sequence, by weighting these signal values (a(i-1), a(i+1)),
- a spacing determination unit (50; 50A, 50B), to which are supplied the mixing value (a(i)) and a third signal value (b(i)) of the second signal sequence (b(k)), the third value lying temporally or spatially between the first and second signal values (a(i-1), a(i+1)), the spacing determination unit determining a mathematical spacing between the mixing value (a(i)) and the third signal value (b(i)) and providing a second spacing value (d(i)) therefrom,
- an interval determination unit (20; 20A, 20B), to which the first and second signal values (a(i-1), a(i+1) are supplied and which determines an interval width of an interval defined by the first and second signal values (a(i-1), a(i+1) and provides an interval width value (m(i)) therefrom,
- a mapping unit (60; 60A, 60B), to which the second spacing value (d(i)) and the interval width value (m(i)) are supplied and which provides a first spacing value (dbd(i)), the mapping unit mapping the second spacing value (d(i)) onto the first spacing value (dbd(i)) using the interval width value (m(i)) as the parameter in such a manner that

a mapping curve (f2, f3, f4) by which the second spacing value (d(i)) is mapped onto the first spacing value (dbd(i)) has at least two segments with different slopes, the slope of the curve, at least in some segments, being smaller for the second spacing values (d(i)) smaller than the interval width value (m(i)) than for the second spacing values (d(i)) larger than the interval width value (m(i)), and
for at least one second spacing value smaller than the interval width value (m(i)), the associated first spacing value (dbd(i)) is smaller than the second spacing value (d(i)), and
the mapping performed by the mapping unit satisfies the following relationship:

$$\texttt{dbd(i) = 1/m(i)} \cdot \texttt{c3} \cdot \texttt{(d(i))}^{2} \texttt{ for m(i)} \neq 0$$

where

dbd(i) is the first spacing value,
d(i) is the second spacing value,
m(i) is the interval width value.

**10.** An apparatus according to Claim 9,
in which the mapping for m(i) = 0 satisfies the following relationship:

$$dbd(i) \ = \ g \cdot d(i)$$

where g is a constant.

**11.** An apparatus according to one of Claims 8 to 10,
in which the interval width value (m(i)) corresponds to half the interval width of the interval defined by the first and second signal values (a(i-1), a(i+1)).

**12.** An apparatus according to one of Claims 8 to 11,
in which the mixing value (a(i)) is the mean value of the first and second signal values (a(i-1), a(i+1)).

**Revendications**

**1.** Procédé de détermination d'une distance entre une première suite de valeurs de signaux a(k) d'une demi-image et une seconde suite de valeurs de signaux b(k) d'une demi-image pour la détection du mouvement, selon lequel on associe chaque fois à une première et à une seconde valeur de signal (a(i-1), a(i+1)) qui se succèdent dans la première suite, une troisième valeur de signal (b(i)) de la seconde suite (b(k)) située temporellement ou spatialement entre la première et la seconde valeur de signal (a(i-1), a(i+1)), le procédé comprenant la détermination d'au moins une première valeur de distance (dbd(i)) en mettant en oeuvre les étapes suivantes:

a) déterminer une valeur de mélange (a(i)) à partir de la première et de la seconde valeur de signal (a(i-1), a(i+1)) par pondération de ces valeurs de signaux (a(i-1), a(i+1)),
b) déterminer une distance mathématique entre la valeur de mélange (a(i)) et la troisième valeur de signal (b(i)) pour fournir une seconde valeur de distance (d(i)),
c) déterminer une valeur de largeur d'intervalle (m(i)) qui est fonction de la largeur d'un intervalle défini par la première et la seconde valeur de signal (a(i-1), a(i+1)),
d) mettre en image la seconde valeur de distance (d(i)) sur la première valeur de distance (dbd(i)) en utilisant la valeur de largeur d'intervalle (m(i)) comme paramètre de mise en image de telle sorte

que:

une courbe de mise en image (f2, f3) mettant la seconde valeur de distance (d(i)) en image sur la première valeur de distance (dbd(i)), présente au moins deux sections dont les pentes diffèrent, la pente de la courbe étant au moins par endroits, plus faible pour des secondes valeurs de distance (d(i)) inférieures à la valeur de largeur d'intervalle (m(i)), que pour des secondes valeurs de distance (d(i)) supérieures à la valeur de largeur d'intervalle (m(i)), et
pour au moins une seconde valeur de distance (d(i)) inférieure à la valeur de largeur d'intervalle (m(i)), la première valeur de distance (dbd(i)) associée est plus petite que la seconde valeur de distance (d(i)), et
la mise en image satisfait les relations suivantes:

$$dbd(i) \ = \ 0 \qquad\qquad\qquad pour \ d(i) \ < \ c1 \ \cdot \ m(i),$$

**15**

$$dbd(i) = g1 \cdot (d(i) - c1 \cdot m(i)) \qquad \text{pour } c1 \cdot m(i) \leq d(i) \leq c2 \cdot m(i),$$

$$dbd(i) = g2 \cdot (d(i) - c2 \cdot m(i)) + g1 \cdot m(i) \cdot (c2 - c1) \text{ pour } c2 \cdot m(i) < d(i)$$

avec c2 > c1 et g2 > g1, et

dbd(i) est la première valeur de distance,
d(i) est la seconde valeur de distance,
m(i) est la valeur de largeur d'intervalle,
c1 est une constante supérieure à zéro,
c2 est une constante supérieure à zéro,
g1 est une constante supérieure à zéro,
g2 est une constante supérieure à zéro.

**2.** Procédé de détermination d'une distance entre une première suite de valeurs de signaux a(k) d'une demi-image et une seconde suite de valeurs de signaux b(k) d'une demi-image pour la détection de mouvement, selon lequel on associe chaque fois à une première et à une seconde valeur de signal (a(i-1), a(i+1)) qui se succèdent dans la première suite, une troisième valeur de signal (b(i)) de la seconde suite (b(k)) située temporellement ou spatialement entre la première et la seconde valeur de signal (a(i-1), a(i+1)), le procédé comprenant la détermination d'au moins une première valeur de distance (dbd(i)) en mettant en oeuvre les étapes suivantes :

a) déterminer une valeur de mélange (a(i)) à partir de la première et de la seconde valeur de signal (a(i-1), a(i+1)) par pondération de ces valeurs de signaux (a(i-1), a(i+1)),
b) déterminer une distance mathématique entre la valeur de mélange (a(i)) et la troisième valeur de signal (b(i)) pour fournir une seconde valeur de distance (d(i)),
c) déterminer une valeur de largeur d'intervalle (m(i)) qui est fonction de la largeur d'un intervalle défini par la première et la seconde valeur de signal (a(i-1), a(i+1)),
d) mettre en image la deuxième valeur de distance (d(i)) sur la première valeur de distance (dbd(i)) en utilisant la valeur de largeur d'intervalle (m(i)) comme paramètre de mise en image de telle sorte

que :

une courbe de mise en image (f2, f3) mettant la seconde valeur de distance (d(i)) en image sur la première valeur de distance (dbd(i)) présente au moins deux sections dont les pentes diffèrent, la pente de la courbe étant au moins par endroits, plus faible pour des secondes valeurs de distance (d(i)) inférieures à la valeur de largeur d'intervalle (m(i)), que pour des secondes valeurs de distance (d(i)) supérieures à la valeur de largeur d'intervalle (m(i)), et
pour au moins une seconde valeur de distance (d(i)) inférieure à la valeur de largeur d'intervalle (m(i)), la première valeur de distance (dbd(i)) associée est plus petite que la seconde valeur de distance (d(i)), et
la mise en image satisfait les relations suivantes :

$$dbd(i) = 1/m(i) \cdot c3 \cdot (d(i))^2 \text{ pour } m(i) \neq 0$$

avec

dbd(i) est la première valeur de distance,
d(i) est la seconde valeur de distance,
m(i) est la valeur de largeur d'intervalle,
c3 est une constante supérieure à zéro.

**3.** Procédé selon la revendication 2, selon lequel la mise en image pour m(i) = 0 satisfait la relation suivante :

$$\texttt{dbd(i)} = \texttt{g3·d(i),}$$

g3 = constante.

**4.** Procédé selon l'une des revendications 1 à 3, selon lequel la valeur de largeur d'intervalle (m(i)) correspond à la moitié de la largeur de l'intervalle défini par la première et la seconde valeur de signal (a(i-1), a(i+1)).

**5.** Procédé selon l'une des revendications 1 à 4, selon lequel la valeur de mélange (a(i)) est la moyenne de la première et de la seconde valeur de signal (a(i-1), a(i+1)).

**6.** Procédé selon l'une des revendications précédentes, selon lequel plusieurs premières valeurs de distance (dbd(i) ; dbd1(i), dbd2(i)) sont formées au moyen de valeurs de signaux de la première et de la seconde suite de signaux (a(k), b(k)), et ces premières valeurs de distance sont reliées entre elles pour déterminer la distance des suites de signaux.

**7.** Procédé selon la revendication 6, selon lequel on additionne les plusieurs premières valeurs de distance (dbd(i) ; dbd1(i) ; dbd2(i)).

**8.** Appareil de détermination d'une distance entre une première suite de valeurs de signaux (a(k)) d'une demi-image et une seconde suite de valeurs de signaux (b(k)) d'une demi-image pour la détection de mouvement, présentant les caractéristiques suivantes :

- une unité de mélange (30 ; 30A, 30B) permettant de générer une valeur de mélange (a(i)), à partir d'une première et d'une seconde valeur de signal (a(i-1), a(i+1)) qui se succèdent dans la première suite de signaux, par pondération de ces valeurs de signaux (a(i-1), a(i+1)),
- une unité de détermination de la distance (50 ; 50A, 50B), recevant la valeur de mélange (a(i)) et une troisième valeur de signal (b(i)) de la seconde suite de signaux (b(k)), cette troisième valeur de signal étant située temporellement ou spatialement entre la première et la seconde valeur de signal (a(i-1), a(i+1)), et qui détermine une distance mathématique entre la valeur de mélange (a(i)) et la troisième valeur de signal (b(i)) et fournit à partir de celle-ci une seconde valeur de distance (d(i)),
- une unité de détermination d'intervalle (20; 20A, 20B), recevant la première et la seconde valeur de signal (a(i-1), a(i+1)) et qui détermine la largeur d'un intervalle défini par la première et la seconde valeur de signal (a(i-1), a(i+1)) et fournit à partir de celle-ci une valeur de largeur d'intervalle (m(i)),
- une unité de mise en image (60 ; 60A, 60B), recevant la seconde valeur de distance (d(i)) et la valeur de largeur d'intervalle (m(i)) et qui fournit une première valeur de distance (dbd(i)), et mettant en image la seconde valeur de distance (d(i)) sur la première valeur de distance (dbd(i)) en utilisant la valeur de largeur d'intervalle (m(i)) comme paramètre, de telle sorte que :
- une courbe de mise en image (f2, f3, f4) mettant la seconde valeur de distance (d(i)) en image sur la première valeur de distance (dbd(i)) présente au moins deux sections dont les pentes diffèrent, la pente de la courbe étant au moins par endroits, plus faible pour des secondes valeurs de distance (d(i)) inférieures à la valeur de largeur d'intervalle (m(i)), que pour des secondes valeurs de distance (d(i)) supérieures à la valeur de largeur d'intervalle (m(i)), et
- pour au moins une seconde valeur de distance (d(i)) inférieure à la valeur de largeur d'intervalle (m(i)), la première valeur de distance (dbd(i)) associée est plus petite que la seconde valeur de distance (d(i)), et
- la mise en image effectuée par l'unité de mise en image satisfait les relations suivantes :

$$\texttt{dbd(i)} = \texttt{0} \qquad \texttt{pour d(i) < c1 · m(i),}$$

$$\texttt{dbd(i)} = \texttt{g1 · (d(i) - c1 · m(i))} \qquad \texttt{pour c1 · m(i) ≤ d(i) ≤ c2 · m(i),}$$

$$dbd(i) = g2 \cdot (d(i) - c2 \cdot m(i)) + g1 \cdot m(i) \cdot (c2 - c1)$$
$$\text{pour } c2 \cdot m(i) < d(i)$$

avec c2 > c1 et g2 > g1, et

dbd(i) est la première valeur de distance,
d(i) est la seconde valeur de distance,
m(i) est la valeur de largeur d'intervalle,
c1 est une constante supérieure à zéro,
c2 est une constante supérieure à zéro,
g1 est une constante supérieure à zéro,
g2 est une constante supérieure à zéro.

**9.** Appareil de détermination d'une distance entre une première suite de valeurs de signaux (a(k)) d'une demi-image et une seconde suite de valeurs de signaux (b(k)) d'une demi-image pour la détection de mouvement, présentant les caractéristiques suivantes:

- une unité de mélange (30 ; 30A, 30B) permettant de générer une valeur de mélange (a(i)), à partir d'une première et d'une seconde valeur de signal (a(i-1), a(i+1)) qui se succèdent dans la première suite de signaux, par pondération de ces valeurs de signaux (a(i-1), a(i+1)),
- une unité de détermination de la distance (50 ; 50A, 50B), recevant la valeur de mélange (a(i)) et une troisième valeur de signal (b(i)) de la seconde suite de signaux (b(k)), cette troisième valeur de signal étant située temporellement ou spatialement entre la première et la seconde valeur de signal (a(i-1), a(i+1)), et qui détermine une distance mathématique entre la valeur de mélange (a(i)) et la troisième valeur de signal (b(i)) et fournit à partir de celle-ci une seconde valeur de distance (d(i)),
- une unité de détermination d'intervalle (20 ; 20A, 20B), recevant la première et la seconde valeur de signal (a(i-1), a(i+1)) et qui détermine la largeur d'un intervalle défini par la première et la seconde valeur de signal (a(i-1), a(i+1)) et fournit à partir de celle-ci une valeur de largeur d'intervalle (m(i)),
- une unité de mise en image (60 ; 60A, 60B), recevant la seconde valeur de distance (d(i)) et la valeur de largeur d'intervalle (m(i)) et qui fournit une première valeur de distance (dbd(i)), et mettant en image la seconde valeur de distance (d(i)) sur la première valeur de distance (dbd(i)) en utilisant la valeur de largeur d'intervalle (m(i)) comme paramètre, de telle sorte que :

   - une courbe de mise en image (f2, f3, f4) mettant la deuxième valeur de distance (d(i)) en image sur la première valeur de distance (dbd(i)) présente au moins deux sections dont les pentes diffèrent, la pente de la courbe étant au moins par endroits, plus faible pour des secondes valeurs de distance (d(i)) inférieures à la valeur de largeur d'intervalle (m(i)), que pour des secondes valeurs de distance (d(i)) supérieures à la valeur de largeur d'intervalle (m(i)), et
   - pour au moins une seconde valeur de distance inférieure à la valeur de largeur d'intervalle (m(i)), la première valeur de distance (dbd(i)) associée est plus petite que la seconde valeur de distance (d(i)), et
   - la mise en image effectuée par l'unité de mise en image satisfait les relations suivantes:

$$dbd(i) = 1/m(i) \cdot c3 \cdot (d(i))^2 \text{ pour } m(i) \neq 0$$

avec

dbd(i) est la première valeur de distance,
d(i) est la deuxième valeur de distance,
m(i) est la valeur de largeur d'intervalle.

**10.** Appareil selon la revendication 9, dans lequel la mise en image pour m(i) = 0 satisfait la relation suivante :

$$dbd(i) = g \cdot d(i)$$

g = constante.

**11.** Appareil selon l'une des revendications 8 à 10, dans lequel la valeur de largeur d'intervalle (m(i)) correspond à la moitié de la largeur de l'intervalle défini par la première et la seconde valeur de signal (a(i-1), a(i+1)).

**12.** Appareil selon l'une des revendications 8 à 11, dans lequel la valeur de mélange (a(i)) est la moyenne de la première et de la seconde valeur de signal (a(i-1), a(i+1)).

## FIG 1A

## FIG 1B

## FIG 2A

$$a(k) = [...a(i-1), a(i+1)...]$$

## FIG 2B

$$b(k) = [...b(i), b(i+2)...]$$

# FIG 3A

## FIG 3B

# FIG 4

FIG 5

# FIG 6

EP 1 471 741 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0027109 A